# EUROPEAN PATENT SPECIFICATION

(11) **EP 2 824 095 B1**
(45) Date of publication and mention of the grant of the patent: **28.10.2020**
(21) Application number: 13758667.3
(22) Date of filing: 04.03.2013
(51) Int. Cl.: C04B 41/85, B22D 41/02, C04B 35/047, C04B 41/87, C04B 41/50, C04B 38/00, C04B 41/00

(54) **SHAPED REFRACTORY AND PROCESS FOR PRODUCING SAME**
GEFORMTES FEUERFESTPRODUKT UND VERFAHREN ZUR HERSTELLUNG DAVON
PRODUIT RÉFRACTAIRE FAÇONNÉ ET SON PROCÉDÉ DE FABRICATION

(30) Priority: 05.03.2012 JP 2012047485
(43) Date of publication of application: 14.01.2015
(73) Proprietor: JFE Steel Corporation, Tokyo 100-0011 (JP)
(72) Inventor: KIYOTA Yoshisato, Tokyo 100-0011 (JP)
(74) Representative: Hoffmann Eitle
(86) International application number: PCT/JP2013/055871
(87) International publication number: WO 2013/133222

(56) References cited:
- WO-A1-2006/041174
- GB-A- 1 087 035
- JP-A- H0 952 755
- JP-A- H06 321 662
- JP-A- H08 290 958
- JP-A- 2000 191 364
- JP-A- 2003 306 385
- JP-A- 2010 501 463
- JP-A- 2011 001 204
- US-A- 3 717 497
- US-A1- 2009 188 347
- DATABASE WPI Week 199718 Thomson Scientific, London, GB; AN 1997-197138 XP002745380, -& JP H09 52755 A (SUMITOMO METAL IND LTD) 25 February 1997 (1997-02-25)

## Description

### TECHNICAL FIELD

This invention relates to a method for producing a shaped refractory having an excellent resistance to slag corrosion and a product obtainable therefrom.

### RELATED ART

A fired refractory is an essential material for production facilities treating high-temperature substances such as iron and steel, cement and the like. It is commonly comprised of oxides such as SiO₂, Al₂O₃, MgO, CaO, ZrO₂, Cr₂O₃, TiO₂ and the like or carbides such as SiC and the like. The fired refractory is obtained by shaping, drying and firing raw compounded materials for refractory in a mold.

The fired refractory includes about 5-25 volume% of open pores (pores) having a size of not less than 10 µm. The fired refractory contacting with a high-temperature molten substance is required to have a corrosion resistance, particularly a resistance to slag corrosion, and hence selection of chemical composition and densification thereof are forwarded. Especially, when the resistance to slag corrosion is required, magnesia-chromia refractory or alumina-chromia refractory containing chromia (Cr₂O₃) is frequently used, but application thereof is limited because chromia is expensive.

As to the magnesia-chromia refractory, it is attempted to improve slag penetration resistance by adding Fe-Cr alloy to the magnesia-chromia refractory to refine the open pores and further impregnating chromia powder of 0.5-1.0 µm together with a liquid solvent dispersing the powder to make 95% of the open pores to not more than 5 µm as disclosed in Patent Document 1.

### PRIOR ART DOCUMENTS

### PATENT DOCUMENT

Patent Document 1: JP-A-H09-52755

### SUMMARY OF THE INVENTION

### TASK TO BE SOLVED BY THE INVENTION

In the refractory disclosed in Patent Document 1, however, the refining of the open pores is mainly focused with the emphasis on the slag penetration resistance, so that there is no consideration on the resistance to slag corrosion and the data thereof is not disclosed. From a viewpoint of the corrosion resistance, the amount of chromia filled is increased, so that it is desirable that the size of the open pore is rather large at the firing stage. In other words, the refractory disclosed in Patent Document 1 is considered to be inefficient in the utilization of chromia and insufficient in the resistance to slag corrosion.

As mentioned above, it is actual that there is no refractory sufficiently satisfying the corrosion resistance and economic efficiency. In view of such an actual condition, the invention is to provide a shaped refractory having excellent corrosion resistance and economic efficiency and a method for producing the same.

### SOLUTION FOR TASK

In order to solve the above task, a shaped refractory made from a fired refractory and an oxide powder and a method for producing the same as defined in the claims are provided. The oxide powder is preferable to be chromia powder, and the fired refractory is preferable to be magnesia-chromia fired refractory.

Also, the method for producing a shaped refractory according to the invention is characterized in that into a fired refractory with a pore volume/pore diameter distribution curve having a maximum peak at a pore diameter of not less than 10 µm is impregnated a slurry containing oxide powder and dispersing agent after mechanical agitation of the slurry for breaking apart of agglomerated particles of the oxide in the slurry and then the fired refractory with the slurry is further dried so that a pore volume/pore diameter distribution curve in the shaped refractory has a peak within a pore diameter range of 0.05-1.0 µm in a central part located at least 5 mm inward from the surface of the shaped refractory in a normal direction.

It is preferable that the slurry containing the oxide powder and dispersing agent is mechanically agitated with beads having a median particle size of 0.1-2 mm as an agitating medium to break apart agglomerated particles of the oxide in the slurry and then impregnated into the fired refractory. Also, it is preferable that the fired refractory is immersed in the slurry containing the oxide powder and dispersing agent under a reduced pressure and then the slurry is pressurized and impregnated into the fired refractory.

When the slurry containing the oxide powder and dispersing agent is impregnated into the fired refractory after the slurry is mechanically agitated to break apart agglomerated particles of the oxide in the slurry, it is preferable that a median particle size of particles suspended in the slurry is less than 1 µm as a measurement value through a laser diffraction scattering method.

The oxide powder is preferable to be chromia powder, and the fired refractory is preferable to be a magnesia-chromia fired refractory.

When the slurry containing the oxide powder and dispersing agent is impregnated into the fired refractory after the slurry is mechanically agitated to break apart agglomerated particles of the oxide in the slurry, it is preferable that a median particle size of particles suspended in the slurry after pH of the slurry is further adjusted to a range of 8-9 is less than 1 µm as a measurement value through a laser diffraction scattering method.

### EFFECT OF THE INVENTION

The shaped refractory according to the invention is a shaped refractory with a pore volume/pore diameter distribution curve in the refractory having a maximum peak at a pore diameter of not less than 10 µm in a central part located at least 5 mm inward from the surface of the shaped refractory in a normal direction, which has a second pore diameter peak at 0.05-1.0 µm because agglomerates of the oxide powder are formed in the pores of the fired refractory, so that a high resistance to slag corrosion is obtained up to the central part of the shaped refractory cheaply.

As the production method of the shaped refractory, the slurry containing the oxide powder and dispersing agent is mechanically agitated to break apart agglomerated particles in the slurry and then impregnated into the fired refractory with a pore volume/pore diameter distribution curve in the refractory having a maximum peak at a pore diameter of not less than 10 µm, so that a high resistance to slag corrosion is obtained up to the central part of the shaped refractory cheaply.

### BRIEF DESCRIPTION OF THE DRAWINGS

FIG. 1(a) is a graph showing an influence of presence or absence of impregnation of a chromia powder containing slurry based on an embodiment of the invention upon pore volume/pore diameter distribution curve in a shaped refractory as a cumulative pore volume/pore diameter distribution, and FIG. 1(b) is a graph showing an influence of presence or absence of impregnation of a chromia powder containing slurry based on an embodiment of the invention upon pore volume/pore diameter distribution curve in a shaped refractory as a differential pore volume/pore diameter distribution.
FIG. 2 is a graph showing a difference of cumulative pore volume/pore diameter distribution in a shaped refractory through impregnation of a chromia powder containing slurry based on an embodiment of the invention (a difference of the data in FIG. 1(a)).
FIG. 3 is a view schematically showing a pore structure of a refractory impregnated with a chromia powder containing slurry based on an embodiment of the invention.
FIG. 4 is a graph showing a particle size distribution of particles suspended in a chromia powder containing slurry based on an embodiment of the invention through a laser diffraction scattering method as compared with a result without breaking apart treatment.
FIG. 5 is a graph showing a corrosion test result of a shaped refractory based on an embodiment of the invention as compared with a result without breaking apart treatment.

### EMBODIMENTS FOR CARRYING OUT THE INVENTION

As the method for producing a shaped refractory in an embodiment of the invention, a slurry containing an oxide powder and a dispersing agent is mechanically agitated to break apart agglomerated particles in the slurry and then impregnated into a fired refractory with a pore volume/pore diameter distribution curve of the refractory having a maximum peak at a pore diameter of not less than 10 µm. The shaped refractory is a shaped refractory with a pore volume/pore diameter distribution curve in the refractory having a maximum peak at a pore diameter of not less than 10 µm, wherein a pore volume/pore diameter distribution curve in the shaped refractory has a second peak within a pore diameter range of 0.05-1.0 µm in a central part located at least 5 mm inward from the surface of the shaped refractory in a normal direction as the slurry containing the oxide powder and the dispersing agent is impregnated after the agglomerated particles in the slurry are broken apart by mechanical agitating. When the slurry containing the oxide powder and dispersing agent is impregnated into the fired refractory after the slurry is mechanically agitated to break apart agglomerated particles of the oxide in the slurry, a median particle size of particles suspended in the slurry is less than 2 µm as a measurement value through a laser diffraction scattering method. Thus, the agglomerates of the oxide powder can be formed in the pores of the refractory efficiently.

The pore volume/pore diameter distribution curve means a graph representing a relationship between differential pore volume corresponding to a pore diameter range defined so as to be equal interval (for example, interval of 0.1) at a common logarithm of the pore diameter (vertical axis) and representative diameter of the pore diameter range (horizontal axis) obtained by a relation between pore diameter and pore volume measured by a mercury porosimeter or the like. (The same applies hereafter.)

The kind of the oxide powder is not particularly limited as long as it hardly forms a low melting point compound together with the fired refractory or a liquid phase ratio is less than 10% at a service temperature of the refractory. Preferably, SiO₂, Al₂O₃, ZrO₂, Cr₂O₃, TiO₂ and the like are used for an acidic fired refractory such as silica brick or the like, and MgO, Cr₂O₃, Al₂O₃, CaO and the like are used for a basic fired refractory such as magnesia-based brick or the like, and Al₂O₃, Cr₂O₃, MgO, SiO₂, ZrO₂ and the like are used for a neutral fired refractory such as alumina-based brick or the like, and MgO, Cr₂O₃, Al₂O₃, SiO₂, ZrO₂ and the like are used for a magnesia-chromia fired refractory, and also powder of a mixture thereof or a composite oxide may be used. Further, it is effective to select the kind of the oxide powder in accordance with the composition condition of the slag easily corroding the refractory. For example, when the corrosion resistance to a low basicity slag having a basicity of not more than 0.8 (mass% CaO/mass% SiO₂) particularly becomes a problem, mass diffusion through molten slag penetrated into the pores can be largely suppressed by using a powder of SiO₂, ZrO₂ or a mixture or a composite oxide thereof, whereby the corrosion resistance may be improved.

Among these oxide powders, MgO and CaO are hydrated into a hydroxide form in an aqueous slurry, so that the hydroxide may be decomposed by re-firing after the impregnation in the fired refractory. Also, since the density is lowered in the hydroxide, the amount of the oxide filled in the fired refractory is decreased associated therewith, so that the formation of the hydroxide can be prevented with a slurry containing alcohol or the like for increasing the filling amount of oxide as a medium. The chromia (Cr₂O₃) powder is particularly preferable since it can be applied to many kinds of fired refractories and is high in the effect of improving the corrosion resistance, so that the followings will be described with reference to the case of using the chromia powder as an example.

The chromia powder usable for the impregnation is not particularly limited, but commercially available ones having a maximum particle size of about 0.3-1.0 µm and a purity of not less than 98% are used for example. In order to impregnate the chromia powder containing slurry efficiently, it is preferable that the refractory has a pore diameter at least one digit larger than the particle size of the chromia powder, so that the pore volume/pore diameter distribution curve of the fired refractory impregnating the chromia powder containing slurry has a maximum peak at a pore diameter of not less than 10 µm. Even in the shaped refractory obtained by drying after the impregnation of the chromia powder containing slurry, therefore, the pore volume/pore diameter distribution curve has a maximum peak at a pore diameter of not less than 10 µm.

The chromia powder is used by dispersing in water or ethanol. Water is available most cheaply and easy in the handling. Ethanol is low in the surface tension and excellent in the dispersing quality or impregnating quality of the chromia powder. The chromia powder is dispersed in water or ethanol at a ratio of 3-40 volume% to form a slurry.

It should be noted that the chromia powder is made dispersed up to a primary particle in the slurry. When the chromia powder is charged into a liquid medium and agitated only in a level of causing no precipitate as usual, the particles of the chromia powder are suspended in the slurry at an agglomerated state. For example, even in the case of using chromia powder of 0.4 µm in average particle size as mentioned later, an average size of the particles suspended in the slurry is not less than 2 µm as measured by a laser diffraction scattering method. When such a slurry is impregnated into the fired refractory, a constricted portion of the pore is clogged with the agglomerated particles of the chromia powder and hence it is difficult to carry the chromia powder up to the inside thereof. For this reason, the impregnation of the slurry into the fired refractory is restricted to the neighborhood of the surface of the refractory, so that the chromia powder reaches to the neighborhood of the surface of the refractory, while only the liquid portion reaches to the inside of the refractory.

In order to facilitate the feeding of the chromia powder to the inside of the refractory, therefore, it is necessary that the dispersion of primary particles of the chromia powder in the slurry is promoted by using a dispersing agent having a group compatible with the chromia powder. The use of a proper dispersing agent is effective to easily break apart the agglomerated particles of the chromia powder and maintain the primary particles at a state of dispersing in the slurry. Sodium salt or ammonium salt of a polymer having a surface activity such as polycarboxylic acid type polymer, β-naphthalenesulfonic acid/formalin condensate or the like has an effect of being adsorbed to oxide particles of chromia or the like to suppress the agglomeration and is preferably used as a dispersing agent.
Furthermore, the state of dispersing the primary particles of the chromia powder can be attained by conducting mechanical agitating with a grinder such as bead mill or a homogenizer for homogenizing the slurry to break apart the agglomerated particles of the chromia powder in the slurry. In this case, energy input rate of the mechanical agitation per slurry volume is preferably not less than 0.2 W/L, more desirably not less than 1 W/L. When the energy input density by mass of the oxide powder is not less than 2 kJ/kg, more desirably not less than 10 kJ/kg, the breaking apart of the agglomerated particles is desirably promoted. The energy input rate is determined by a difference between power consumption in the breaking apart treatment and power consumption corresponding to friction loss in the idling using no slurry and agitating medium such as beads or the like.

In the bead mill, it is particularly preferable to use ceramic beads having an average particle size of about 0.1-2 mm as a medium. The bead mill comprises a vessel storing the beads and slurry, a rotor agitating the beads and so on and can be continued by arranging an inlet and an outlet of the slurry in the vessel. Also, there can be used a pot mill or the like, wherein the beads and slurry are charged into a pot and vibration or rotation is applied to the pot to agitate the beads and slurry.

The slurry containing the oxide (chromia) powder and the dispersing agent is mechanically agitated to break apart the agglomerated particles in the slurry as mentioned above, whereby the median particle size of the particles suspended in the slurry for impregnating into the fired refractory is preferably set to less than 1 µm as a value measured by a laser diffraction scattering method. Such a slurry containing the oxide powder and the dispersing agent is impregnated into the fired refractory with a pore volume/pore diameter distribution curve having a maximum peak at a pore diameter of not less than 10 µm, whereby the slurry can be impregnated up to a central part located at least 5 mm inward from the surface of the shaped refractory in a normal direction to form an agglomerate of the oxide (chromia) particles in the inside of the pore of the fired refractory to thereby improve the corrosion resistance.

The slurry can be impregnated into the fired refractory under vacuum or in the application of pressure.

For example, the fired refractory is placed in a vessel of an airtight chamber and thereafter air in the chamber is deaerated by a vacuum pump to substantially evacuate the pores of the fired refractory in the vessel, and then the slurry is poured into the vessel at an airtight state and impregnated into the pores of the fired refractory in the vessel by static pressure of the slurry itself without blocking by air, and thereafter air is returned to the airtight chamber to further impregnate the slurry under an atmospheric pressure. Moreover, air in the airtight chamber may be pressurized to further pressurize the slurry, whereby the impregnation of the slurry can be promoted.

The fired refractory impregnated with the slurry is taken out from the slurry and dried by evaporating the liquid medium to obtain a shaped refractory in which the agglomerate of the oxide (chromia) particles is formed in the pore of the fired refractory.

The slurry after the use can be used repeatedly by refilling an amount impregnated into the fired refractory, but the impregnation may become difficult when the slurry is used over a long period because the oxide particles are gradually agglomerated. Therefore, it is desirable to confirm the particle size distribution of the particles suspended in the slurry as needed and to exchange the slurry with a newly adjusted slurry as the ratio of the agglomerated particles having a particle size of not less than 2 µm is increased. In this case, as the newly adjusted slurry can be used a slurry obtained by reutilizing the deteriorated slurry and adjusting concentrations of the ingredient and dispersing agent such as pH and the like for again applying to the breaking apart treatment.

When the corrosion resistance is required only in the surface of the refractory, it is economic to impregnate the slurry into only the surface portion. In general, it is required to improve the corrosion resistance up to the central part of the shaped refractory, so that it is necessary to impregnate the slurry into the central part of the shaped refractory. When the aforementioned breaking apart treatment by the mechanical agitation is not conducted, even if oxide particles having a primary particle size of less than 1 µm are used, the median particle size of the particles suspended in the slurry is not less than 2 µm as a value measured by a laser diffraction scattering method. When such a slurry is impregnated into the fired refractory with a pore volume/pore diameter distribution curve having a maximum peak at a pore diameter of not less than 10 µm, the oxide particles in the slurry reaches to only a surface portion of less than 5 mm located from the surface, and it is difficult to improve the corrosion resistance at the further inside thereof.

The kind of the fired refractory capable of using in the embodiment of the invention is not particularly limited. A fired refractory made from a pure substance, a compound or a mixture of oxides such as SiO₂, Al₂O₃, MgO, CaO, ZrO₂, Cr₂O₃, TiO₂ and the like or carbides such as SiC and the like can be used, but a magnesia-chromia fired refractory is particularly preferable in a point that the corrosion resistance is high to the slags having a wider range of composition.

However, when the slurry containing the oxide powder and the dispersing agent is impregnated into the fired refractory, it should be noted that the distance of the oxide particles penetrated from the surface of the refractory may be scatted in accordance with the conditions such as kind of the dispersing agent and the like. The cause is considered to be an influence of a component dissolved from the fired refractory into the slurry, a change of a concentration due to the adsorption of the component in the slurry onto the fired refractory, or the like. Even if a large change is not caused in the components of the solution as a whole of the slurry, a surface area of the refractory to the amount of the solution becomes very large in the slurry penetrated in the pores, so that there is a possibility that the components of the solution in the pore are largely changed even in the impregnation for a relatively short time. Even in this case, in order to keep the dispersed state of the oxide particles in the slurry at a state suitable for the impregnation, it is desirable that the dispersing agent is selected by confirming that a size of particles suspended in the slurry becomes adequate under previously anticipated solution conditions.

In case of the magnesia-chromia fired refractory, it is preferable to select the dispersing agent so that the median particle size of the particles suspended in the slurry is set to less than 1 µm as a value measured by a laser diffraction scattering method after the slurry containing the oxide powder and the dispersing agent is mechanically agitated to break apart the agglomerated particles in the slurry and an aqueous solution of sodium hydroxide or the like is added to the slurry to adjust pH to a range of 8-9. As an example of such a dispersing agent are mentioned sodium salts of polymers having a surface activity such as polycarboxylic acid type polymers, β-naphthalenesulfonic acid/formalin condensate and the like, but are not limited thereto. Any dispersing agents satisfying the above conditions can be desirably used.

For example, when a dispersing agent of an acidic polymer is used as mentioned later, pH of an initial slurry is a range of 5-6. When such a slurry is impregnated into a magnesia-chromia fired refractory repeatedly, pH is gradually increased to a range of 7-8. In the pores of the magnesia-chromia fired refractory, pH is considered to be a range of 9-10 as an equilibrium dissolution value by an shake flask method using the crushed refractory. In case of a slurry obtained by a breaking apart treatment of an aqueous slurry containing 8.0 volume% of chromia for refractory having a nominal average particle size of 0.4 µm with such a dispersing agent, the median particle size of the initial suspended particles is 0.22 µm. When such a slurry is added and mixed with an aqueous solution of sodium hydroxide to adjust pH to a range of 8-9, the median particle size of the suspended particles is increased up to about 0.7 µm. In case of using this dispersing agent, good corrosion resistance is obtained up to the central part in both of the shaped refractory according to an embodiment of the invention prepared by impregnating an initial slurry with pH of 5-6 and the shaped refractory according to an embodiment of the invention prepared by impregnating repeatedly used slurry with pH of 7-8. In case of such a dispersing agent that the agglomeration is promoted up to a median particle size of the suspended particles of not less than 2 µm by the increase of pH, however, the chromia particles are difficult to be carried to the central part of the shaped refractory and it is difficult to stably obtain the high corrosion resistance.

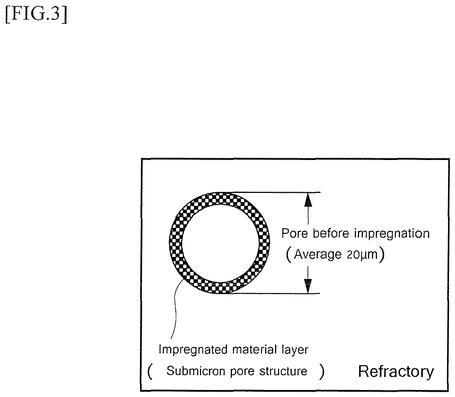

By drying after the impregnation of the chromia powder containing slurry, the porosity of the refractory is decreased by about 1-10% from that of the fired refractory used as a starting material and the chromia concentration is increased by about 1-15 mass%. Also, the second pore diameter peak is provided at 0.05-1.0 µm by impregnating the chromia powder containing slurry. This peak is presumed by detecting a fine pore corresponding to a gap between mutual particles of the chromia powder in a packed layer (impregnated material layer) when the impregnated chromia powder forms the packed layer (impregnated material layer) in the inner wall of the pore of the fired refractory as shown in FIG. 3.

The chromia packed layer formed in the pore of the fired refractory is presumed to have an effect of efficiently suppressing the slag corrosion. The pore volume in the pore diameter of 0.05-1.0 µm (which can be measured by a mercury porosimeter) is set to not less than 1 ml/kg, more desirably not less than 3 ml/kg, whereby the corrosion resistance can be improved effectively. The upper limit of the pore volume in the pore diameter of 0.05-1.0 µm is not particularly set and may be not less than 10 ml/kg in case of using the ordinary fired refractory. The method utilizing the impregnation of the chromia powder containing slurry has large effect of improving the corrosion resistance and excellent cost performance as compared to the case of mixing chromia simply to a raw material of the fired refractory.

The pore in the fired refractory corresponds to a grain boundary between particles of a high melting point starting material. In the corrosion of the fired refractory through the molten slag, wear of the refractory is progressed by penetration of the molten slag into the grain boundary portion to lower a melting point in a bond part between the particles of the starting material to thereby fall out of the particles of the starting material into the molten slag. In the shaped refractory according to the embodiment of the invention, the agglomerate of the chromia or other oxide particles is formed in the pore portion of the fired refractory or the grain boundary portion between the particles of the starting material so as to include a pore of 0.05-1.0 µm, so that the molten slag penetrated into the pore forms a high melting point compound with the oxide particles at an early stage to effectively protect the bond part between the particles of the starting material in the fired refractory, and hence a proportion of the wear of the refractory progressing due to the falling out of the starting material particles becomes small and the corrosion rate can be decreased significantly.

Furthermore, the agglomerate of the chromia or other oxide particles is formed so as to have a pore of 0.05-1.0 µm even in the central part located at least 5 mm inward from the surface of the shaped refractory in a normal direction, so that the effect of decreasing the corrosion rate can be maintained even at a stage of promoting the melt loss up to the central part of the shaped refractory.

### EXAMPLES

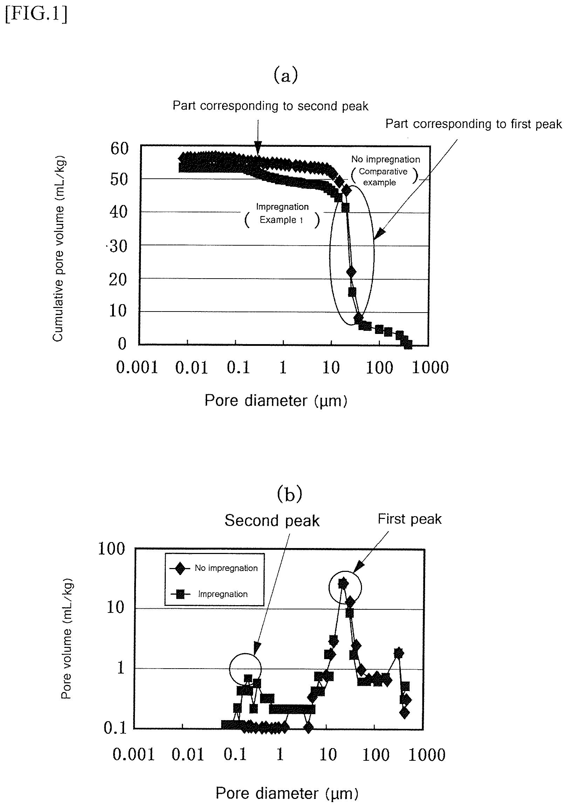

A shaped refractory according to an embodiment of the invention is prepared by impregnating a chromia powder containing slurry into direct bond magnesia-chromia bricks (10 mass% Cr2O3-MgO; porosity: 21.0%), which is compared with a direct bond magnesia-chromia brick for comparison without impregnation. The direct bond magnesia-chromia brick used is manufactured according to usual manner and has a pore volume/pore diameter distribution curve having a maximum peak at a pore diameter of about 20 µm as shown in FIG. 1.

As the chromia are provided a chromia for refractory having a nominal average particle size of 0.4 µm (Example 1) and a chromia for paint having a nominal average particle size of 0.4 µm (Example 2). Together with 7.5 mass% of an acidic polymer dispersing agent, each chromia is added to pure water (ion-exchanged water) to form an aqueous slurry having a volume ratio of chromia of 4.0 volume%. 10 L of the slurry is treated to break apart with bead mill using zirconia beads of 1 mm in diameter at an energy input rate of 1.5 W/L for 2 hours and then used for impregnation. As the dispersing agent is used a high molecular weight copolymer having a functional group compatible with the oxide particles. The direct bond magnesia-chromia bricks having a thickness of 80 mm are used and side faces other than faces vertical to the thickness direction are sealed so as not to penetrate the slurry from these side faces and thereafter subjected to an impregnation treatment in a vacuum vessel. After the inside of the vacuum vessel is reduced to not more than 1 kPa, the slurry after the above breaking apart treatment is charged into the vessel under a reduced pressure so that the bricks are immersed in the slurry. Then, the slurry is pressurized under an atmospheric pressure by introducing air into the vessel to conduct the impregnation for 30 minutes, and thereafter the bricks impregnated with the slurry are dried at 110°C to obtain a shaped refractory sample for test. As to an aqueous slurry containing 8.0 volume% of chromia for refractory with a nominal average particle size of 0.4 µm (Example 3), a shaped refractory sample for test is prepared by conducting the same slurry adjustment and impregnation as mentioned above.

With respect to the above shaped refractories for test and a direct bond magnesia-chromia brick for comparison without impregnation (Comparative Example 1) are measured the corrosion resistance and pore volume/pore diameter distribution by the following manner. Two shaped refractory samples of each example for test are cut into trapezoidal prisms and combined with the samples for comparison in such a manner that a face including a shorter base of the trapezoidal section (upper base face) is a surface not sealed in the impregnation and the upper base face faces inward, whereby a test vessel having an octagonal columnar shape with a horizontal axis is prepared. A slag is charged from an opening port formed in the end wall of the octagonal columnar test vessel into the inside of the test vessel and then the test vessel is rotated about its axis and the test temperature is controlled by burner heating to conduct slag corrosion test (rotary slag method). Under a condition that the slag basicity is 1.0 and the slag is replaced with a new one every 1 hour, the corrosion is conducted at 1750°C for 4 hours and the test refractory after the cooling is cut to measure an average corroded depth, which is evaluated by a corrosion index in which the corroded depth of Comparative Example 1 without impregnation corresponds to be 100.

The pore volume/pore diameter distribution is determined by cutting out a measuring sample for mercury porosimeter from a central part of about 40 mm located from each surface of the above shaped refractories for test and the brick sample for comparison and measuring with the mercury porosimeter.

The evaluation results of the corrosion resistance and pore volume/pore diameter distribution on each example are shown in Table 1.

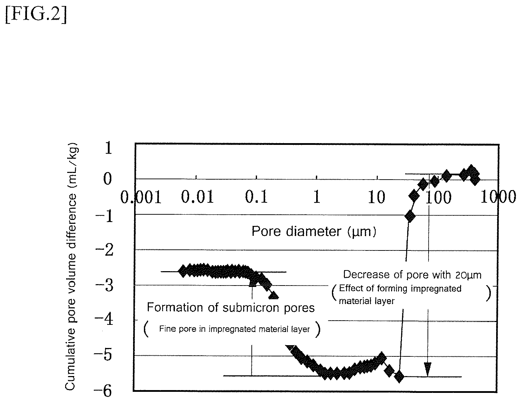

As seen from Table 1, all refractories of Examples 1-3 indicate an excellent resistance to slag corrosion. Examples of pore volume/pore diameter distribution (Example 1 and Comparative Example 1) are shown in FIGS. 1(a) and (b). FIG. 1(a) shows an influence upon pore volume/pore diameter distribution in the central part of the shaped refractory by the presence (Example 1) or absence (Comparative Example 1) of impregnation with chromia powder containing slurry based on an embodiment of the invention as a distribution of cumulative pore volume (accumulation from maximum pore diameter to a particular pore diameter) with respect to pore diameter, and FIG. 1(b) an influence upon pore volume/pore diameter distribution in the central part of the shaped refractory by the presence (Example 1) or absence (Comparative Example 1) of impregnation with chromia powder containing slurry based on an embodiment of the invention as a differential pore volume/pore diameter distribution. In the case where the impregnation of the chromia powder containing slurry is present (Example 1), the second pore diameter peak exists at 0.05-1.0 µm. Furthermore, the difference of pore volume/pore diameter distribution between Example 1 and Comparative Example 1 is shown in FIG. 2 as a cumulative pore volume difference. It can be confirmed that the impregnation of the chromia powder containing slurry decreases the pore volume of not less than 20 µm in the fired refractory and increases the pore volume of 0.05-1.0 µm corresponding to the agglomerate of chromia particles in the impregnated slurry. In FIG. 3 is shown a model of the pore structure in the shaped refractory according to the embodiment of the invention recognized from micro-observation of the pore portion.

In the shaped refractory according to the embodiment of the invention, it is presumed that the agglomerate of the chromia powder particles is formed as a packed layer so as to cover the inner wall of the pore in the fired refractory by impregnating the chromia powder containing slurry into the pores with an average size of about 20 µm in the fired refractory and drying it and hence the bond parts between the particles of starting material in the fired refractory are protected effectively to provide an effect of suppressing the slag corrosion efficiently.

**Table 1**

| | Example 1 | Example 2 | Example 3 | Comparative Example |
|---|---|---|---|---|
| Chromia concentration in slurry (volume%) | 4.0 | 4.0 | 8.0 | - |
| Porosity (%) | 16.5 | 16.3 | 14.0 | 21.0 |
| Pore diameter of second peak (µm) | 0.21 | 0.25 | 0.22 | none |
| Pore volume (0.05-1.0 µm: ml/kg) | 3.1 | 3.4 | 5.4 | 0.3 |
| Slag corrosion (index) | 71 | 72 | 58 | 100 |

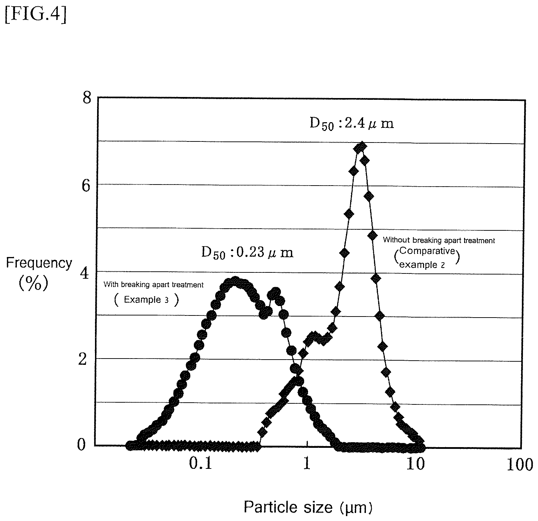

With respect to an example that an aqueous slurry of 8.0 volume% chromia for refractory having a nominal average particle size of 0.4 µm likewise Example 3 is prepared by agitating to a level of causing no precipitation by means of an agitating implements without adding the dispersing agent (Comparative Example 2), the result of particle size distribution measured by a laser diffraction scattering method of particles suspended in the slurry is shown in FIG. 4 as compared to that of the slurry used in Example 3. In Comparative Example 2 without breaking apart treatment, it is seen that the median particle size of the particles suspended in the slurry is 2.4 µm regardless of the use of powder having a nominal average particle size of 0.4 µm and the chromia powder is agglomerated. On the other hand, when 7.5 mass% of the acidic polymer dispersing agent is added to the chromia and the breaking apart treatment is conducted by means of a bead mill with zirconia beads of 1 mm in diameter for 2 hours, the median particle size of the slurry is 0.22 µm and the agglomerated powder is broken apart to a level of primary particle size. In case of using such an acidic polymer dispersing agent, pH of the initial slurry is about 5-6, but when the slurry is added and mixed with an aqueous solution of 0.1N sodium hydroxide to adjust pH to 8-9, the median particle size of particles suspended in this slurry is measured to be about 0.7 µm by a laser diffraction scattering method.

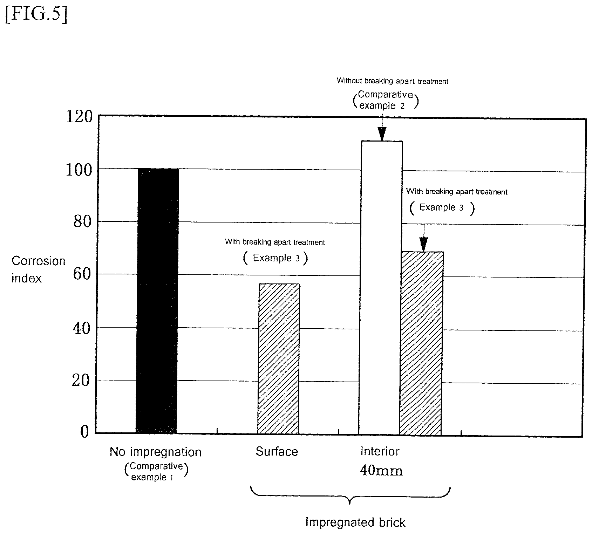

With respect to shaped refractories (Comparative Example 2 (without breaking apart treatment) and Example 3 (with breaking apart treatment)) prepared by impregnating two kinds of slurries shown in FIG. 4 into direct bond magnesia-chromia bricks as mentioned above, the corrosion resistance is evaluated in the central part in thickness direction. The upper base face of the trapezoidal prism sample is cut so as to match with a central plane of the shaped refractory in thickness direction and assembled into the octagonal columnar test vessel so that the upper base face faces inward, which is subjected to corrosion test by the same rotary slag method as mentioned above. The result is shown in FIG. 5 by a corrosion index in which the corroded depth of Comparative Example 1 without impregnation corresponds to be 100. In Comparative Example 2 using the slurry not subjected to a breaking apart treatment, the chromia containing slurry cannot be reached to the central part of the brick, and hence the corrosion resistance in the inside of the brick cannot be improved (the corroded quantity is substantially equal to the case without slurry impregnation). On the other hand, in Example 3 using the slurry after the breaking apart treatment, it can be confirmed that the corroded quantity in the central part of the brick during the impregnation is decreased by 30% than that without impregnation and hence the corrosion resistance in the central part of the brick can be improved although this is somewhat poorer than that in the surface part during the impregnation in the brick.

The invention is not limited to the above examples and may be properly modified within the scope of the claims.

### INDUSTRIAL APPLICABILITY

Thus, the high resistance to slag corrosion can be attained cheaply according to the fired refractory of the invention and production method thereof.

## Claims

1. A method for producing a shaped refractory, **characterized in that** into a fired refractory with a pore volume/pore diameter distribution curve having a maximum peak at a pore diameter of not less than 10 µm is impregnated a slurry containing oxide powder and dispersing agent after mechanical agitation of the slurry for breaking apart of agglomerated particles of the oxide in the slurry and then the fired refractory with the slurry is further dried so that a pore volume/pore diameter distribution curve in the shaped refractory has a maximum peak at a pore diameter of not less than 10 µm and also a peak within a pore diameter range of 0.05∼1.0 µm in a central part located at least 5 mm inward from the surface of the shaped refractory in a normal direction,
wherein when the slurry containing the oxide powder and dispersing agent is impregnated into the fired refractory after the slurry is mechanically agitated to break apart agglomerated particles of the oxide in the slurry, a median particle size of particles suspended in the slurry is less than 2 µm as a measurement value through a laser diffraction scattering method.

2. The method for producing a shaped refractory according to claim 1, wherein the slurry containing the oxide powder and dispersing agent is mechanically agitated with beads having a median particle size of 0.1∼2 mm as an agitating medium to break apart agglomerated particles of the oxide in the slurry and then impregnated into the fired refractory.

3. The method for producing a shaped refractory according to claim 1 or 2, wherein the fired refractory is immersed in the slurry containing the oxide powder and dispersing agent under a reduced pressure and then the slurry is pressurized and impregnated into the fired refractory.

4. The method for producing a shaped refractory according to any one of claims 1 to 3, wherein when the slurry containing the oxide powder and dispersing agent is impregnated into the fired refractory after the slurry is mechanically agitated to break apart agglomerated particles of the oxide in the slurry, a median particle size of particles suspended in the slurry is less than 1 µm as a measurement value through a laser diffraction scattering method.

5. The method for producing a shaped refractory according to any one of claims 1 to 4, wherein the oxide powder is chromia powder.

6. The method for producing a shaped refractory according to any one of claims 1 to 5, wherein the fired refractory is magnesia-chromia fired refractory.

7. The method for producing a shaped refractory according to claim 6, wherein when the slurry containing the oxide powder and dispersing agent is impregnated into the fired refractory after the slurry is mechanically agitated to break apart agglomerated particles of the oxide in the slurry, a median particle size of particles suspended in the slurry after pH of the slurry is further adjusted to a range of 8∼9 is less than 1 µm as a measurement value through a laser diffraction scattering method.

8. A shaped refractory, obtainable by the method according to any one of claims 1 to 7.

## Patentansprüche

1. Verfahren zur Herstellung eines geformten Feuerfestmaterials, **dadurch gekennzeichnet, dass** in ein gebranntes Feuerfestmaterial mit einer Porenvolumen-/ Porendurchmesser-Verteilungskurve, die einen maximalen Peak bei einem Porendurchmesser von nicht weniger als 10 µm aufweist, eine Aufschlämmung imprägniert wird, die Oxidpulver und Dispersionsmittel enthält, nach mechanischem Rühren der Aufschlämmung zum Auseinanderbrechen von agglomerierten Teilchen des Oxids in der Aufschlämmung, und dann das gebrannte Feuerfestmaterial mit der Aufschlämmung ferner getrocknet wird, so dass eine Porenvolumen-/Porendurchmesser-Verteilungskurve in dem geformten Feuerfestmaterial einen maximalen Peak bei einem Porendurchmesser von nicht weniger als 10 µm und zudem einen Peak innerhalb eines Bereichs eines Porendurchmessers von 0,05∼1,0 µm in einem zentralen Abschnitt, der sich mindestens 5 mm von der Oberfläche des geformten Feuerfestmaterials nach innen in Normalenrichtung befindet, aufweist;
worin, wenn die Aufschlämmung, die das Oxidpulver und das Dispersionsmittel enthält, in das gebrannte Feuerfestmaterial imprägniert wird, nachdem die Aufschlämmung mechanisch gerührt wurde, so dass agglomerierte Teilchen des Oxids in der Aufschlämmung auseinandergebrochen werden, eine mittlere Teilchengröße der in der Aufschlämmung suspendierten Teilchen als Messwert durch ein Laserbeugungsstreuungsverfahren weniger als 2 µm beträgt.

2. Verfahren zur Herstellung eines geformten Feuerfestmaterials gemäß Anspruch 1, worin die Aufschlämmung, die das Oxidpulver und das Dispersionsmittel enthält, mechanisch mit Kügelchen mit einer mittleren Teilchengröße von 0,1∼2 mm als Rührmedium gerührt wird, so dass agglomerierte Teilchen des Oxids in der Aufschlämmung auseinandergebrochen werden, und dann in das gebrannte Feuerfestmaterial imprägniert wird.

3. Verfahren zur Herstellung eines geformten Feuerfestmaterials gemäß Anspruch 1 oder 2, worin das gebrannte Feuerfestmaterial unter reduziertem Druck in die Aufschlämmung, die das Oxidpulver und das Dispersionsmittel enthält, eingetaucht wird und dann die Aufschlämmung unter Druck gesetzt und in das gebrannte Feuerfestmaterial imprägniert wird.

4. Verfahren zur Herstellung eines geformten Feuerfestmaterials gemäß mindestens einem der Ansprüche 1 bis 3, worin, wenn die Aufschlämmung, die das Oxidpulver und das Dispersionsmittel enthält, in das gebrannte Feuerfestmaterial imprägniert wird, nachdem die Aufschlämmung mechanisch gerührt wurde, so dass agglomerierte Teilchen des Oxids auseinandergebrochen werden, eine mittlere Teilchengröße der in der Aufschlämmung suspendierten Teilchen als Messwert durch ein Laserbeugungsstreuungsverfahren weniger als 1 µm beträgt.

5. Verfahren zur Herstellung eines geformten Feuerfestmaterials gemäß mindestens einem der Ansprüche 1 bis 4, worin das Oxidpulver Chromoxidpulver ist.

6. Verfahren zur Herstellung eines geformten Feuerfestmaterials gemäß mindestens einem der Ansprüche 1 bis 5, worin das gebrannte Feuerfestmaterial Magnesiumoxid-Chromoxid-Feuerfestmaterial ist.

7. Verfahren zur Herstellung eines geformten Feuerfestmaterials gemäß Anspruch 6, worin, wenn die Aufschlämmung, die das Oxidpulver und das Dispersionsmittel enthält, in das gebrannte Feuerfestmaterial imprägniert wird, nachdem die Aufschlämmung mechanisch gerührt wurde, so dass agglomerierte Teilchen des Oxids in der Aufschlämmung auseinandergebrochen werden, die mittlere Teilchengröße der in der Aufschlämmung suspendierten Teilchen, nachdem der pH-Wert der Aufschlämmung ferner auf einen Bereich von 8∼9 eingestellt wurde, als Messwert durch ein Laserbeugungsstreuungsverfahren weniger als 1 µm beträgt.

8. Geformtes Feuerfestmaterial, erhältlich durch das Verfahren gemäß mindestens einem der Ansprüche 1 bis 7.

## Revendications

1. Procédé de production d'un produit réfractaire façonné, **caractérisé en ce que** dans un produit réfractaire cuit ayant une courbe de distribution volume de pore/diamètre de pore présentant un pic maximal à un diamètre de pore de pas moins de 10 µm est imprégnée une suspension contenant une poudre d'oxyde et un agent de dispersion après agitation mécanique de la suspension pour briser les particules agglomérées de l'oxyde dans la suspension et ensuite le produit réfractaire cuit avec la suspension est en outre séché de sorte qu'une courbe de distribution volume de pore/diamètre de pore dans le produit réfractaire façonné présente un pic maximal à un diamètre de pore de pas moins de 10 µm et également un pic dans une plage de diamètres de pore de 0,05∼1,0 µm dans une partie centrale située au moins à 5 mm vers l'intérieur à partir de la surface du produit réfractaire façonné dans une direction normale,
dans lequel quand la suspension contenant la poudre d'oxyde et l'agent de dispersion est imprégnée dans le produit réfractaire cuit après que la suspension a été agitée mécaniquement pour briser les particules agglomérées de l'oxyde dans la suspension, une taille particulaire médiane des particules en suspension dans la suspension est inférieure à 2 µm en tant que valeur de mesure par un procédé de dispersion par diffraction laser.

2. Procédé de production d'un produit réfractaire façonné selon la revendication 1, dans lequel la suspension contenant la poudre d'oxyde et l'agent de dispersion est agitée mécaniquement avec des billes présentant une taille particulaire médiane de 0,1-2 mm en tant que milieu d'agitation pour briser les particules agglomérées de l'oxyde dans la suspension et ensuite imprégnée dans le produit réfractaire cuit.

3. Procédé de production d'un produit réfractaire façonné selon la revendication 1 ou 2, dans lequel le produit réfractaire cuit est immergé dans la suspension contenant la poudre d'oxyde et l'agent de dispersion sous une pression réduite et ensuite la suspension est pressurisée et imprégnée dans le produit réfractaire cuit.

4. Procédé de production d'un produit réfractaire façonné selon l'une quelconque des revendications 1 à 3, dans lequel quand la suspension contenant la poudre d'oxyde et l'agent de dispersion est imprégnée dans le produit réfractaire cuit après que la suspension a été agitée mécaniquement pour briser les particules agglomérées de l'oxyde dans la suspension, une taille particulaire médiane des particules en suspension dans la suspension est inférieure à 1 µm en tant que valeur de mesure par un procédé de dispersion par diffraction laser.

5. Procédé de production d'un produit réfractaire façonné selon l'une quelconque des revendications 1 à 4, dans lequel la poudre d'oxyde est une poudre d'oxyde de chrome.

6. Procédé de production d'un produit réfractaire façonné selon l'une quelconque des revendications 1 à 5, dans lequel le produit réfractaire cuit est un produit réfractaire cuit à base de magnésie-oxyde de chrome.

7. Procédé de production d'un produit réfractaire façonné selon la revendication 6, dans lequel quand la suspension contenant la poudre d'oxyde et l'agent de dispersion est imprégnée dans le produit réfractaire cuit après que la suspension a été agitée mécaniquement pour briser les particules agglomérées de l'oxyde dans la suspension, une taille particulaire médiane des particules en suspension dans la suspension après que le pH de la suspension est en outre ajusté dans une plage allant de 8 à 9 est inférieure à 1 µm en tant que valeur de mesure par un procédé de dispersion par diffraction laser.

8. Produit réfractaire façonné, pouvant être obtenu par le procédé selon l'une quelconque des revendications 1 à 7.
